# EUROPÄISCHE PATENTSCHRIFT

(11) **EP 1 970 591 B1**
(45) Veröffentlichungstag und Bekanntmachung des Hinweises auf die Patenterteilung: **17.02.2010**
(21) Anmeldenummer: 07024574.1
(22) Anmeldetag: 19.12.2007
(51) Int. Cl.: F16D 65/12

(54) **Federelemente für zusammengesetzte Bremsscheiben**
Spring element for composite brake discs
Eléments de ressort pour disques de frein

(30) Priorität: 10.03.2007 DE 102007011743
(43) Veröffentlichungstag der Anmeldung: 17.09.2008
(73) Patentinhaber: AUDI AG, 85045 Ingolstadt (DE)
(72) Erfinder: Reulein, Harald, 86750 Megesheim (DE); Freiermuth, Thomas, 89077 Ulm (DE)
(74) Vertreter: Asch, Konrad

(56) Entgegenhaltungen:
- EP-A- 1 553 322
- WO-A-02/25135
- WO-A-03/058087
- GB-A- 2 340 564
- US-A- 3 754 624

## Beschreibung

Die Erfindung betrifft Federelemente für zusammengesetzte Bremsscheiben.

Üblicherweise werden Carbon-Keramik-Bremsscheiben in zweiteiliger Form ausgeführt, wobei ein keramischer zylinderringförmiger Reibring an einem metallischen Topf befestigt wird. Der metallische Topf wird seinerseits an einer Nabe an der Radwelle (Radnabe) mit Hilfe von Verschraubungen befestigt. Zur Befestigung des Reibringes an dem Topf werden üblicherweise Kombinationen von Schrauben und Muttern eingesetzt, wobei die Druckfläche zwischen dem Schraubenkopf oder der Mutter und dem keramischen Reibring durch Beilagscheiben vergrößert wird. Dabei werden in vorteilhafter Weise auch vorgespannte Beilagscheiben (Federringe, Tellerfedern) eingesetzt.

Auch Bremsscheiben mit einem Bremsring aus Grauguss-Material werden zweiteilig ausgeführt, wobei gemäß der Patentschrift EP 0 718 521 B1 bevorzugt sowohl der Bremsscheibenring als auch der Bremsscheibentopf aus einem Graugussmaterial ausgeführt werden.

Eine derartige Befestigung mit Schrauben und Muttern sowie Tellerfedern ist beispielsweise aus der Patentschrift EP 0 718 521 B1 bekannt.

Aus der Patentanmeldung GB 2 340 564 A ist eine Konstruktion einer Scheibenbremse bekannt, bei der ein Bremsscheibentopf mit einer axial verschiebbaren Reibscheibe kombiniert ist, wobei die Reibscheibe Vor- und Rücksprünge aufweist, die entsprechend umgekehrt in dem Bremsscheibentopf ausgebildet sind, und wobei zwischen den einander zugewandten Teil-Zylindermantelflächen Federelemente auf den Mantelflächen angebracht sind, die auf der Mantelfläche des Bremsscheibentopfs aufliegen und mit mindestens drei wellenartigen Ausbuchtungen gegen die Reibscheibe drücken.

Wegen der mechanischen Eigenschaften von keramischen Werkstoffen ist es erforderlich, die Auflagefläche der federnden Beilagscheiben so zu gestalten, dass die bei der Befestigung der Bremsscheibe und im Betrieb der Bremse entstehenden Drücke, die auf den keramischen Werkstoff wirken, so gering gehalten werden, dass keine Schädigung der keramischen Werkstoffe auftreten kann.

Die Aufgabe wird durch die im Anspruch 1 beschriebenen Merkmale gelöst. Bevorzugte Ausführungsformen sind in den Unteransprüchen angegeben.

Die mit der vorliegenden Erfindung erzielten Vorteile sind eine Erleichterung der Montage dadurch, dass weniger federnde Teile, in einer bevorzugten Ausführungsform nur ein federndes Teil pro Bremsscheibe eingesetzt werden muss, eine wirksame axiale Dämpfung der zusammengesetzten Bremsscheibe, eine Reduktion der Flächenpressung im Auflagebereich, die besonders bei einem Bremsscheibentopf aus Aluminium oder Aluminiumlegierungen erwünscht ist, und ein radiales Spiel durch federnde Verformung des Federringes in radialer Richtung. Das Maß dieser zulässigen Verformung kann leicht durch geeignete Wahl von Federeigenschaften und Materialdicke sowie Ausführung der Stufen der Federelemente eingestellt werden.

Ausführungsbeispiele der Erfindung werden durch die Zeichnungen dargestellt. Dabei zeigen
- Fig. 1 eine: perspektivische Ansicht einer zusammengesetzten Bremsscheibe mit verbundenem Bremsscheibentopf und Bremsscheibenring sowie einem Federring, wobei der Federring auf die Außenseite des Bremsscheibentopfes aufgelegt ist,
- Fig.2: einen Schnitt durch ein Federelement, bei dem die Stufe ohne Rücksprung ausgeführt ist, und
- Fig. 3: einen Schnitt durch ein Federelement, bei dem Z-förmige Stufen mit Rücksprüngen ausgebildet sind.

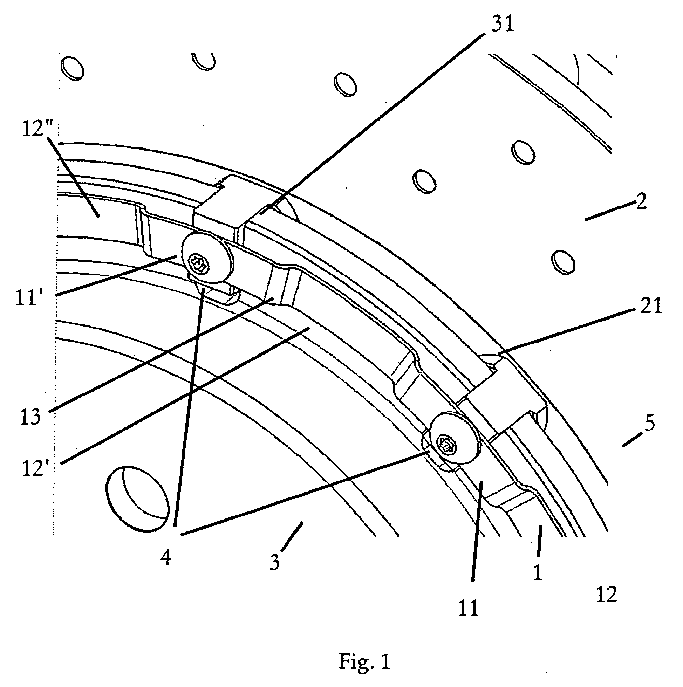

Eine zusammengesetzte Bremsscheibe 5 umfasst in bevorzugter Weise einen Bremsscheibenring 2 und einen Bremsscheibentopf 3 sowie einen Federring 1, der entweder gemäß Fig. 1 auf der Außenseite des Bremsscheibentopfes 3, also auf der von dem Bremsscheibenring 2 abgewandten Seite, oder zwischen dem Bremsscheibentopf 3 und dem Bremsscheibenring 2 angeordnet sein kann, wobei der Bremsscheibenring und der Bremsscheibentopf durch Schrauben und hier nicht dargestellte Muttern miteinander verbunden sind. Dabei liegen jeweils die Abschnitte 11 von dem Bremsscheibenring abgewandt, und die Abschnitte 12 dem Bremsscheibenring zugewandt (gemäß Fig. 1) oder direkt auf dem Bremsscheibenring auf.

Eine andere bevorzugte Ausführungsform ist, solche Federelemente vorzusehen, die jeweils durch mindestens zwei der als Befestigungselemente verwendeten Schrauben 4 gehalten werden und dadurch auch verdrehsicher sind.

Erfindungsgemäß weist das Federelement 1 abwechselnd hintereinander mindestens vier Stufen 13 auf, derart dass sich jeweils mindestens zwei Abschnitte 11, 11' in Umfangsrichtung an eine obere Ebene 21 und jeweils die in Umfangsrichtung benachbarten Abschnitte 12, 12', 12" an eine untere Ebene 22 anschmiegen, wobei die obere Ebene 2) und die untere Ebene 22 parallel stehen und einen senkrechten Abstand von 1 mm bis 10 mm aufweisen, und die sich an die obere Ebene anschmiegenden Abschnitte 11 weisen Bohrungen 111 für Befestigungsschrauben 4 auf, und das Verhältnis der Summe der Bogenlängen der sich an die obere Ebene anschmiegenden Abschnitte 11 zu der Summe der Bogenlängen der sich an die untere Ebene anschmiegenden Abschnitte 12 beträgt von 1:1 bis 1:5.

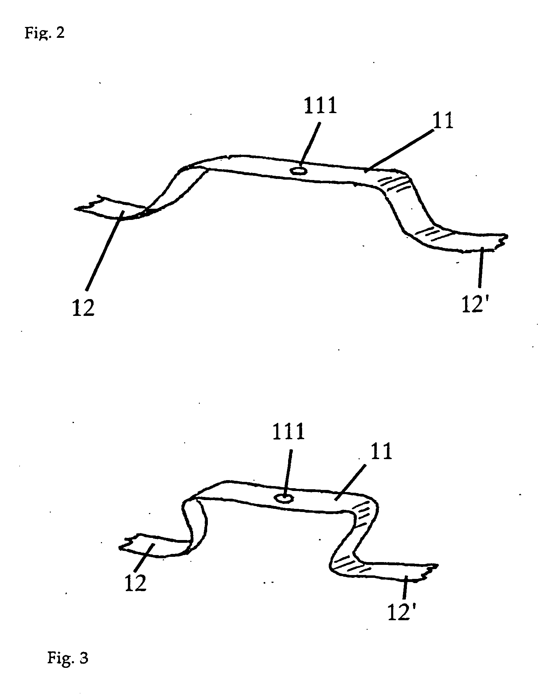

Die Stufe zwischen den Abschnitten 11 und 12 kann entweder ohne Rücksprung ausgeführt sein, wie in Fig. 2 dargestellt, oder mit Rücksprüngen in Form eines abgerundeten "Z" gemäß der Fig. 3, wobei jeweils zwei benachbarte Stufen spiegelbildlich zueinander ausgerührt sind. Diese Ausführungsform bietet den Vorteil, dass bei einer federnden Beanspruchung kein Schub in Umfangsrichtung ausgeübt wird, der zu einer Ausbauchung in den Abschnitten 11 und 12 führt.

Das Federelement (1) bildet einen geschlossenen Ring.

Die zusammengesetzten Bremsscheiben gemäß der Erfindung bieten insgesamt einen verbesserten Bremskomfort, wobei die Federkraft durch geeignete Wahl der Materialstärke, der Stufenhöhe, der Ausführung der Stufe und der Art des verwendeten Federstahls für das Federelement individuell auf den Verwendungszweck (das betreffende Fahrzeug, die gewünschte sportliche oder komfortable Note) eingestellt werden kann.

## Patentansprüche

1. Zusammengesetzte Bremsscheibe (5) umfassend einen Bremsscheibenring (2) und einen metallischen Bremsscheibentopf (3) sowie mindestens ein Federelement (1) für die axiale Dämpfung und die Befestigung des Bremsscheibenringes (2) an dem metallischen Bremsscheibentopf (3), **dadurch gekennzeichnet, dass** das Federelement (1) einen geschlossenen Ring bildet und abwechselnd hintereinander mindestens vier Stufen (13) aufweist, derart dass jeweils mindestens zwei Abschnitte (11, 11') in Umfangsrichtung an eine obere Ebene (21) und jeweils die in Umfangsrichtung benachbarten Abschnitte (12, 12',12") an eine untere Ebene (22) sich anschmiegen, wobei das Federelement (1) mit den sich an die untere Ebene anschmiegenden Abschnitten auf dem metallischen Bremsscheibentopf (3) aufliegt, und die obere (21) und die untere (22) Ebene parallel stehen und einen senkrechten Abstand von 1 mm bis 10 mm aufweisen, dass die sich an die obere Ebene anschmiegenden Abschnitte (11) Bohrungen (111) für Befestigungsschrauben (4) aufweisen, und dass das Verhältnis der Summe der Bogenlängen der sich an die obere Ebene anschmiegenden Abschnitte (11) zu der Summe der Bogenlängen der sich an die untere Ebene anschmiegenden Abschnitte (12) von 1:1 bis 1:5 beträgt.

2. Zusammengesetzte Bremsscheibe (5) nach Anspruch 1, **dadurch gekennzeichnet, dass** das Material des Federelements Stahl ist.

3. Zusammengesetzte Bremsscheibe (5) nach Anspruch 1, **dadurch gekennzeichnet, dass** die Stufen (13) des Federelements ein Z-förmiges Profil aufweisen, wobei jeweils zwei benachbarte Z-förmige Stufen (13,13') spiegelbildlich zueinander ausgeführt sind.

4. Zusammengesetzte Bremsscheibe (5) nach Anspruch 1, **dadurch gekennzeichnet, dass** das Federelement (1) mit den sich an die untere Ebene anschmiegenden Abschnitten auf dem metallischen Bremsscheibentopf (3) aufliegt und Befestigungsschrauben (4) durch die Bohrungen (111), durch Bohrungen oder Aussparungen (31) in dem metallischen Bremsscheibentopf (3) und durch Bohrungen oder Aussparungen (21) in dem Bremsscheibenring (2) geführt sind und auf der dem Schraubenkopf (41) abgewandten Seite des Bremsscheibenringes (2) mit einer Mutter oder einem Befestigungsteil (42) fixiert sind, derart dass eine Kraft auf den Abschnitt (11) des Federelements (1) in Richtung auf den Bremsscheibenring (2) ausgeübt wird.

5. Zusammengesetzte Bremsscheibe (5) nach Anspruch 4, **dadurch gekennzeichnet, dass** mindestens ein Teil der Abschnitte (12) auf dem Bremsscheibentopf (3) befestigt ist.

6. Zusammengesetzte Bremsscheibe (5) nach Anspruch 5, **dadurch gekennzeichnet, dass** die Abschnitte (12) auf dem Bremsscheibentopf (3) durch Verkleben und/oder Verschrauben befestigt sind.

## Claims

1. Composite brake disc (5) comprising a brake disc ring (2) and a metal brake disc bowl (3) and at least one spring element (1) for axial damping and for attaching the brake disc ring (2) to the metal brake disc bowl (3), **characterized in that** the spring element (1) forms a closed ring and has at least four steps (13) in it that successively alternate so that each segment of one set of at least two segments (11, 11') in the circumferential direction lies on an upper plane (21) and each of the adjacent segments (12, 12', 12") in the circumferential direction lies on a lower plane (22), the spring element (1) bearing on the metal brake disc bowl (3) through the segments lying on the lower plane, and the upper (21) and lower (22) planes lying parallel and spaced perpendicularly 1 mm to 10 mm apart; **in that** the segments (11) lying on the upper plane have holes (111) for fixing screws (4); and **in that** the ratio of the sum of the lengths of arc of the segments (11) lying on the upper plane to the sum of the lengths of arc of the segments (12) lying on the lower plane is from 1:1 to 1:5.

2. Composite brake disc (5) according to Claim 1, **characterized in that** the material of the spring element is steel.

3. Composite brake disc (5) according to Claim 1, **characterized in that** the steps (13) in the spring element have a Z-shaped profile, with every two adjacent Z-shaped steps (13, 13') formed as a mirror-inverted pair.

4. Composite brake disc (5) according to Claim 1, **characterized in that** the spring element (1) bears on the metal brake disc bowl (3) through the segments lying on the lower plane, and fixing screws (4) are passed through the holes (111), through holes or gaps (31) in the metal brake disc bowl (3) and through holes or gaps (21) in the brake disc ring (2) and are fixed with a nut or fastener (42) on the side of the brake disc ring (2) facing away from the screw head (41) so as to exert a force on the segment (11) of the spring element (1) in the direction towards the brake disc ring (2).

5. Composite brake disc (5) according to Claim 4, **characterized in that** a least a part of the segments (12) is attached to the brake disc bowl (3).

6. Composite brake disc (5) according to Claim 5, **characterized in that** the segments (12) are attached to the brake disc bowl (3) by gluing and/or screwing.

## Revendications

1. Disque de freinage (5) composé comportant un anneau (2) de disque de freinage et une cavité métallique (3) du disque de freinage ainsi qu'au moins un élément ressort (1) pour l'amortissement axial et pour la fixation de l'anneau (2) du disque de freinage sur une cavité métallique (3) du disque de freinage, **caractérisé en ce que** l'élément ressort (1) forme un anneau fermé et présente en alternance les uns derrière les autres au moins quatre paliers (13), de telle sorte qu'au moins respectivement deux sections (11, 11') s'adaptent dans le sens de la périphérie à un niveau supérieur (21) et que les sections (12, 12', 12") se trouvant à proximité dans le sens de la périphérie s'adaptent à un niveau inférieur (22), l'élément ressort (1) reposant sur la cavité métallique (3) du disque de freinage avec les sections s'adaptant au niveau inférieur, et les niveaux supérieur (21) et inférieur (22) étant parallèles et présentant une distance verticale allant de 1 mm à 10 mm, **en ce que** les sections (11) s'adaptant au niveau supérieur présentent des alésages (111) pour des vis de fixation (4), et **en ce que** le rapport de la somme des longueurs de l'arc des sections (11) s'adaptant au niveau supérieur va de 1:1 à 1:5 par rapport à la somme des longueurs de l'arc des sections (12) s'adaptant au niveau inférieur.

2. Disque de freinage (5) composé selon la revendication 1, **caractérisé en ce que** le matériau de l'élément ressort est de l'acier.

3. Disque de freinage (5) composé selon la revendication 1, **caractérisé en ce que** les paliers (13) de l'élément ressort présentent un profilé en forme de Z, deux paliers (13, 13') en forme de Z adjacents étant respectivement réalisés l'un par rapport à l'autre par symétrie de miroir.

4. Disque de freinage (5), composé selon la revendication 1, **caractérisé en ce que** l'élément ressort (1) repose sur la cavité métallique (3) du disque de freinage avec les sections s'adaptant au niveau inférieur, **en ce que** les vis de fixation (4) sont guidées à travers les alésages (111) ou les évidements (31) dans la cavité métallique (3) du disque de freinage et à travers les alésages ou les évidements (21) dans l'anneau (2) du disque de freinage, et **en ce qu'**elles sont fixées sur le côté de l'anneau du disque de freinage (2) opposé à la tête de vis (41) avec un écrou ou un élément de fixation (42), de telle sorte qu'une force est exercée sur la section (11) de l'élément ressort (1) dans la direction de l'anneau (2) du disque de freinage.

5. Disque de freinage (5) composé selon la revendication 4, **caractérisé en ce qu'**au moins une partie des sections (12) est fixée sur la cavité (3) du disque de freinage.

6. Disque de freinage (5) composé selon la revendication 5, **caractérisé en ce que** les sections (12) sont fixées sur la cavité (3) du disque de freinage par collage et/ou vissage.
